# EUROPEAN PATENT APPLICATION

(11) **EP 2 469 327 A2**
(43) Date of publication of application: **27.06.2012**
(21) Application number: 11165049.5
(22) Date of filing: 06.05.2011
(51) Int. Cl.: G02F 1/133, G06F 3/033

(54) **Touch panel**

(30) Priority: 22.12.2010 TW 099145660; 04.01.2011 TW 100100027; 16.03.2011 TW 100109064
(71) Applicant: Chimei InnoLux Corporation, Miao-Li County (TW)
(72) Inventor: Chan, Kai-Chieh, 350, Chu-Nan, Miao-Li County (TW); Chen, Hsin-Li, 350, Chu-Nan, Miao-Li County (TW); Chen, Hung-Yu, 350, Chu-Nan, Miao-Li County (TW); Yang, Chiu-Lien, 350, Chu-Nan, Miao-Li County (TW); Pang, Jia-Pang, 350, Chu-Nan, Miao-Li County (TW); Ting, Chin-Lung, 350, Chu-Nan, Miao-Li County (TW)
(74) Representative: 2K Patentanwälte Blasberg Kewitz & Reichel

(57) **Abstract**

The disclosure provides a touch panel which includes: a first substrate; a second substrate disposed oppositely to the first substrate, and the first substrate or the second substrate has a thickness smaller than or equal to 0.3 mm; a liquid crystal layer disposed between the first substrate and the second substrate; and a touch sensor directly formed on a surface of the second substrate away from the liquid crystal layer, wherein the touch sensor includes a patterned transparent conducting layer.

## Description

### CROSS REFERENCE TO RELATED APPLICATIONS

This Application claims priority of Taiwan Patent Application No. 099145660, filed on December, 22, 2010, Taiwan Patent Application No. 100100027, filed on January, 4, 2011, Taiwan Patent Application No.100109064, filed on March, 16, 2011, the entirety of which is incorporated by reference herein.

### BACKGROUND OF THE DISCLOSURE

### Field of the Disclosure

The present disclosure relates to a panel, and in particular relates to a touch panel.

### Description of the Related Art

Consumer electronic applications are becoming increasingly diverse with the rapid progress of science and teclmology. In various electronic products, touch panels are widely used in portable electronic products (such as personal digital assistant (PDA) or mobile phone) because they are light, thin, short and small.

Conventionally, touch sensors and display panels are fabricated separately and then assembled to form a touch panel. There are several types of touch panels including resistive, capacitive, and surface acoustic wave optic touch panels, etc.

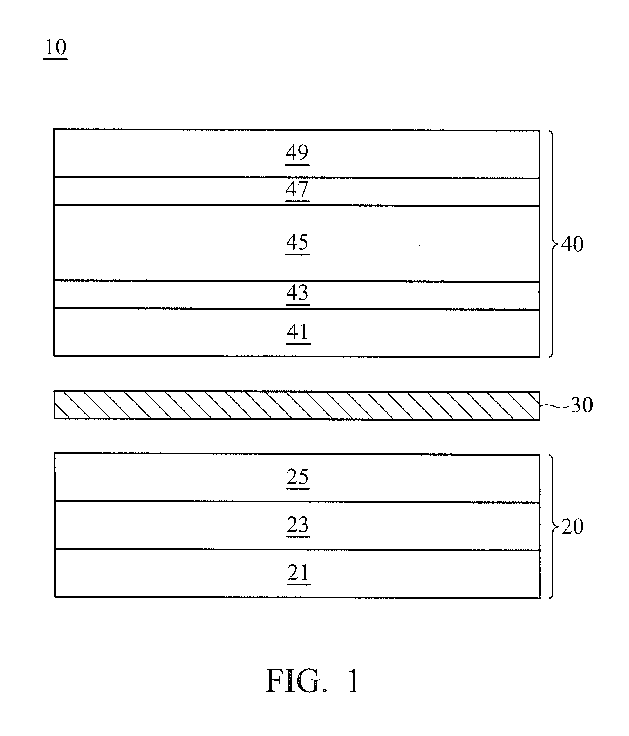

FIG.1 shows a cross-sectional schematic representation of a typical capacitive touch panel 10. The capacitive touch panel 10 includes a display panel 20 and a touch sensor 40 disposed oppositely thereto, and an adhesion layer 30 is formed between the display panel 20 and the touch sensor 40. The display panel 20 includes a TFT substrate 21, a liquid crystal layer 23 and a color filter substrate 25, and the touch panel 40 comprises a substrate 41, a metal layer 43, an insulating layer 45, an indium tin oxide (ITO) layer 47, and a protection layer 49. Because the touch sensor 40 has a certain thickness, it is difficult to reduce the total thickness and weight of the typical capacitive touch panel 10. Additionally, when light passes through the adhesion layer 30, some of the light gets transmitted through the adhesion layer 30 while the rest gets reflected. Thus, transmittance of typical capacitive touch panel 10 is reduced due to the presence of adhesion layer 30. Furthermore, misalignment occurs when the display panel 20 is adhered to the touch sensor 40 of the conventional capacitive touch panel 10.

Therefore, there is a need to develop a touch panel with a reduced thickness and weight to simplify fabrication processes and reduce process costs.

### BRIEF SUMMARY OF THE DISCLOSURE

The disclosure provides a touch panel, including: a first substrate; a second substrate disposed oppositely to the first substrate, and the first substrate or the second substrate has a thickness smaller than or equal to 0.3 mm; a liquid crystal layer disposed between the first substrate and the second substrate; and a touch sensor directly formed on a surface of the second substrate away from the liquid crystal layer, wherein the touch sensor includes a patterned transparent conducting layer.

A detailed description is given in the following embodiments with reference to the accompanying drawings.

### BRIEF DESCRIPTION OF THE DRAWING

For a more complete understanding of the present disclosure, and the advantages thereof, reference is now made to the following descriptions taken in conjunction with the accompanying drawings, in which:

FIG. 1 shows a cross-sectional schematic representation of prior art;

FIGs. 2A-2D show cross-sectional schematic representations of a touch panel in accordance with the disclosure;

FIGs. 3A-3B show cross-sectional schematic representations of a touch sensor in accordance with the disclosure;

FIGs. 4A-4D show cross-sectional schematic representations of various stages of fabricating a touch panel in accordance with a embodiment of the disclosure; and

FIGs. 5A-5C show cross-sectional schematic representations of various stages of fabricating a touch panel in accordance with another embodiment of the disclosure.

### DETAILED DESCRIPTION OF THE DISCLOSURE

The following description is of the best-contemplated mode of carrying out the disclosure. This description is made for the purpose of illustrating the general principles of the disclosure and should not be taken in a limiting sense. The scope of the disclosure is best determined by reference to the appended claims.

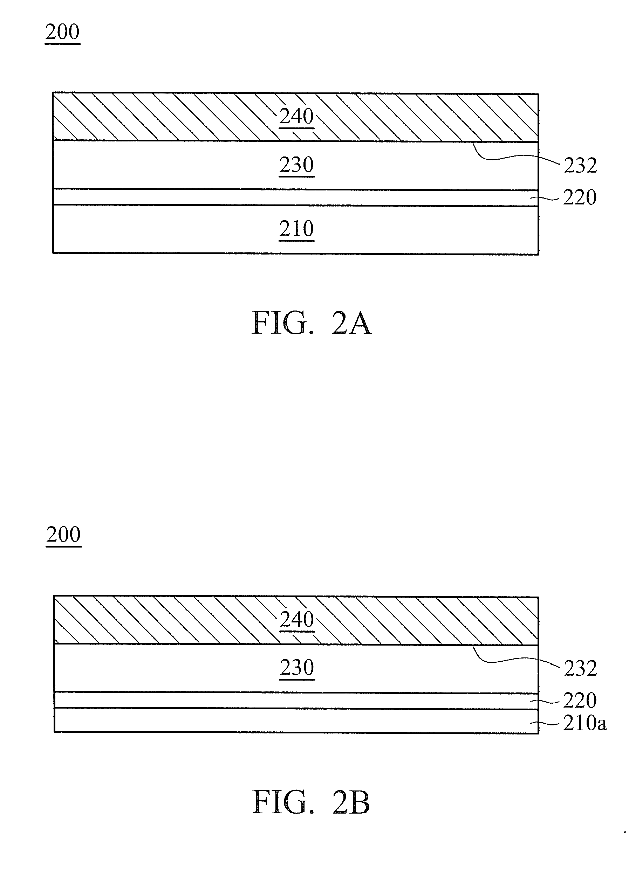

FIG. 2A shows a cross-sectional schematic representation of a touch panel 200 in accordance with an embodiment of the disclosure. The touch panel 200 includes a first substrate 210, a liquid crystal layer 220, a second substrate 230 and a touch sensor 240, and the second substrate 230 is disposed oppositely to the first substrate 210, and the liquid crystal layer 220 is disposed between the first substrate 210 and the second substrate 230. The main feature of the disclosure is that the touch sensor 240 is directly formed on a surface 232 of the second substrate 230 away from the liquid crystal layer 220, and the touch sensor 240 includes a patterned transparent conducting layer.

In one embodiment, the first substrate 210 is a thin film transistor (TFT) substrate and the second substrate 230 is a color filter substrate. More specifically, a thin film transistor device is formed on a surface of the first substrate 210 close to the second substrate 230, and a color filter device is formed on a surface of the second substrate 230 close to the first substrate 210. In another embodiment, the first substrate 210 is a color filter substrate and the second substrate 230 is a thin film transistor (TFT) substrate. More specifically, a color filter device is formed on a surface of the first substrate 210 close to the second substrate 230, and a thin film transistor device is formed on a surface of the second substrate 230 close to the first substrate 210.

The TFT substrate may include a sub-substrate and an array layer, and the material of the sub-substrate includes glass, quartz, plastic, resin or other suitable material. Glass is widely used as a sub-substrate. The array layer may include a thin film transistor, pixel electrode, scan line and data lines.

The color filter substrate may include color filter layers and a black matrix (BM), and the color filter layers include red color filters, blue color filters and green color filters, and the black matrix is formed between the color filter layers of different colors.

In FIG. 2A, the first substrate 210 and the second substrate 230 has a thickness of about 0.5 mm, and the liquid crystal layer 220 has a smaller thickness of about 2-5 µm. Thus, the thickness of the touch panel 200 is limited to a sum of the thicknesses of the first substrate 210 and the second substrate 230.

In another embodiment, the thickness of the first substrate 210 and the second substrate 230 may be reduced. Referring to FIG. 2B-2D, a thinned first substrate 210a or a thinned second substrate 230a is provided and formed by a thinning method (such as physical polishing or chemical etching method).

Referring to FIG. 2B, a thinned first substrate 210a is provided and has a thickness which is smaller than or equal to 0.3 mm, and preferably about 0.15-0.30 mm.

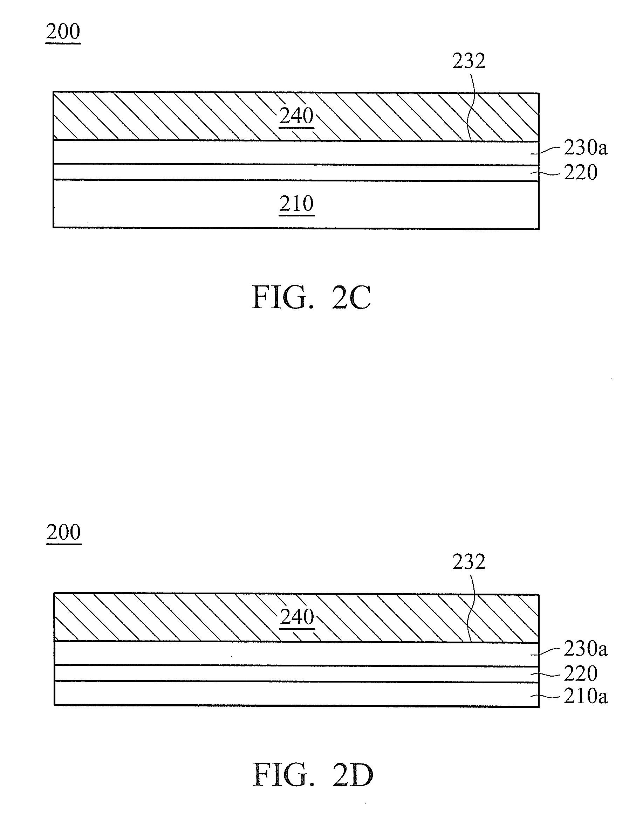

Referring to FIG. 2C, a thinned second substrate 230a is provided and has a thickness which is smaller than or equal to 0.3 mm, and preferably about 0.15-0.30 mm.

Referring to FIG. 2D, a thinned first substrate 210a and a thinned second substrate 230a are provided and independently have a thickness which is smaller than or equal to 0.3 mm, and preferably about 0.15-0.30 mm.

Therefore, the thickness of the touch panel 200 of FIG. 2B-2D is reduced to about 0.80-0.30 mm to meet requirements for implementation in thin and light electronic products.

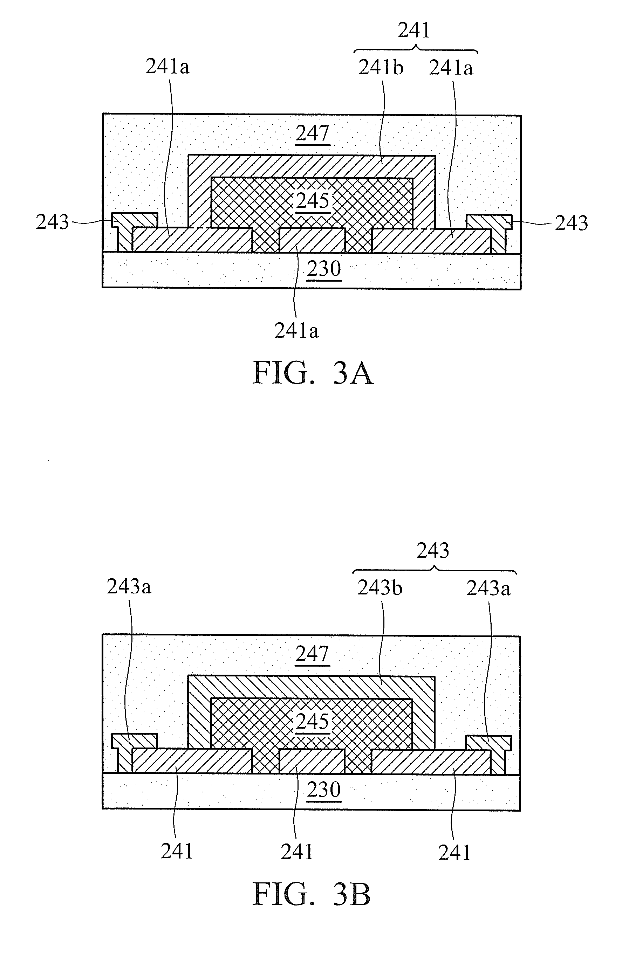

FIG. 3A shows a cross-sectional schematic representation of the touch sensor 240 formed on the second substrate 230 in accordance with an embodiment of the disclosure. The touch sensor 240 includes the patterned transparent conducting layers 241, a metal layer 243, a dielectric layer 245 and a protection layer 247, and the patterned transparent conducting layers 241 includes a plurality of planar patterned transparent conducting layers 241a and a bridge patterned transparent conducting layers 241b.

The device of FIG. 3A is fabricated by the following steps. Firstly, the planar patterned transparent conducting layers 241 a are formed by depositing and patterning of a transparent layer by a deposition process and a patterning process. Then, the metal layer 243 is formed by a deposition process on the outside of the planar patterned transparent conducting layers 241a. Next, a dielectric layer 245 is formed between each of the planar patterned transparent conducting layers 241a. The bridge patterned transparent conducting layers 241b is deposited over the dielectric layer 245 and between adjacent planar patterned transparent conducting layers 241 a which are designed to be electrically connected to each other. Finally, the protection layer 247 is formed on the second substrate 230, the planar patterned transparent conducting layers 241 a, the bridge patterned transparent conducting layers 241b, the metal layer 243, and the dielectric layer 245 for external moisture and dust pollution protection.

FIG. 3B shows a cross-sectional schematic representation of the touch sensor 240 formed on the second substrate 230 in accordance with another embodiment of the disclosure. The touch sensor 240 includes the patterned transparent conducting layers 241, a metal layer 243, a dielectric layer 245 and a protection layer 247, and the metal layer 243 includes a plurality of planar metal layers 243a and bridge metal layers 243b.

FIG. 3B is fabricated by the following steps. Firstly, the patterned transparent conducting layers 241 are formed by depositing and patterning of a transparent layer by a deposition process and a patterning process. Then, the dielectric layer 245 is formed between each of the patterned transparent conducting layers 241. Then, the planar metal layers 243a are formed by performing a deposition process on the outsides of the patterned transparent conducting layers 241. Next, the bridge metal layers 243b are deposited over the dielectric layer 245 and between adjacent patterned transparent conducting layers 241 which are designed to be electrically connected to each other. Finally, the protection layer 247 is formed on the second substrate 230, the patterned transparent conducting layers 241, the planar metal layer 243a, the bridge metal layer 243b, and the dielectric layer 245 for external moisture and dust pollution protection.

Note that the difference between the FIG. 3A and FIG. 3B is that the adjacent patterned transparent conducting layers 241 which are designed to be electrically connected to each other are connected by the bridge patterned transparent conducting layers 241b in FIG. 3A, and by the bridge metal layers 243b in FIG. 3B.

The patterning process includes a photolithography process which includes photoresist coating, soft baking, mask aligning, exposure, post-exposure, developing photoresist and hard baking processes, etc.. These processes are known to those skilled in the art, and thus are omitted here.

The patterned transparent conducting layer 241 includes indium tin oxide (ITO), indium zinc oxide (IZO), cadmium tin oxide (CTO), aluminum zinc oxide (AZO), indium tin zinc oxide (ITZO) zinc oxide, cadmium oxide (CdO), hafnium oxide (HfO), indium gallium zinc oxide (InGaZnO), indium gallium zinc magnesium oxide (InGaZnMgO), indium gallium magnesium oxide (InGaMgO) or indium gallium aluminum oxide (InGaAlO).

In one embodiment, the indium tin oxide (ITO) is used as the patterned transparent conducting layer 241 because it has a transmittance of higher than 90 %.

Moreover, the patterned transparent conducting layer 241 may include independent matrix strictures or intersection matrix structure. In one embodiment, an ITO transparent conducting matrix is used as an independent matrix sense element. In another embodiment, two isolated horizontal (columns) and vertical (column) ITO transparent conductive layers are used as the intersection matrix of row and column sense element.

The patterned transparent conducting layer 241 of the touch sensor 240 is formed by a deposition process, such as chemical vapor deposition (CVD) or physical vapor deposition (PVD).

In one preferred embodiment, a transparent conducting layer is directly deposited on the second substrate 230 and patterned to form the patterned transparent conducting layer 241.

Additionally, referring to FIG. 1, in prior art, the display panel 20 and the touch sensor 40 are combined by the adhesion 30. Thus, the substrate 41 of the touch sensor 40 has a certain thickness and the adhesion 30 is indispensable. Note that, compared with prior art, the touch sensor 240 of the disclosure is directly formed on the second substrate 230, and thus thickness of the touch sensor 240 is reduced due to elimination of substrates of the touch panel (such as the substrate 41 in FIG. 1) and the adhesion layer (such as the adhesion layer 30 in FIG. 1). Additionally, when the patterned transparent conducting layer 241 is used as the electrode, it produces a self-frequency. The self-frequency of the patterned transparent conducting layer 241 is not affected by the frequency of the display panel (made of first substrate 210, liquid crystal layer 220 and second substrate 230), and thus it may be used as a shielding layer.

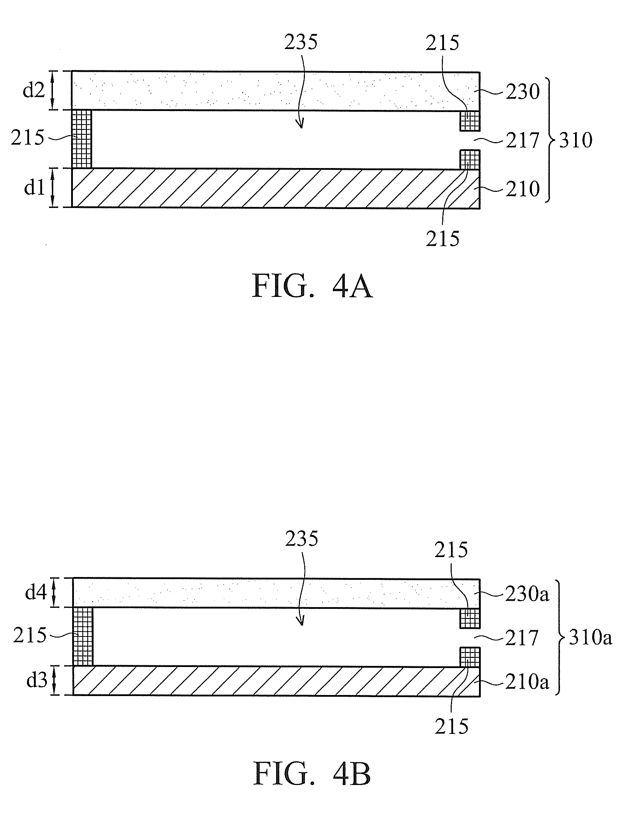

Figures 4A-4D show cross-sectional schematic representations of various stages of fabricating a touch panel in accordance with a embodiment of the disclosure. Referring to FIG. 4A, a display panel 310 which includes a first substrate 210 and a second substrate 230 is provided, and the first substrate 210 has a thickness of about d₁, the second substrate 230 has a thickness of about d₂, and d₁ and d₂ are the same or different. In one embodiment, the first substrate 210 is adhered to the second substrate 230 by a sealant 215 which is formed around the outside of the first substrate 210 or the second substrate 230. Thus, the first substrate 210 is disposed oppositely to the second substrate 230 to form a sealing space 235 with an opening 217.

Then, referring to FIG. 4B, the display panel 310 is thinned. In FIG.4B, the first substrate 210 and the second substrate 230 are thinned to form a thinned first substrate 210a and a thinned second substrate 230a, and thus the thickness of the first substrate 210 is decreased from d₁ to d₃, and the thickness of the second substrate 230 is decreased from d₂ to d₄, and d₃ and d₄ are the same or different. Alternatively, in another embodiment, the first substrate 210 or the second substrate 230 is thinned. The substrate is thinned by a thinng method (such as a physical polishing or chemical etching method).

Note that in one embodiment, the thickness of the first substrate 210 and the second substrate 230 are decreased from 0.5 mm to 0.3 mm. Thus, the total thickness of the display panel 310 is decreased from 1.0 mm to 0.6 mn. In a preferred embodiment, a 0.4 mm of thinned display panel 310a is obtained.

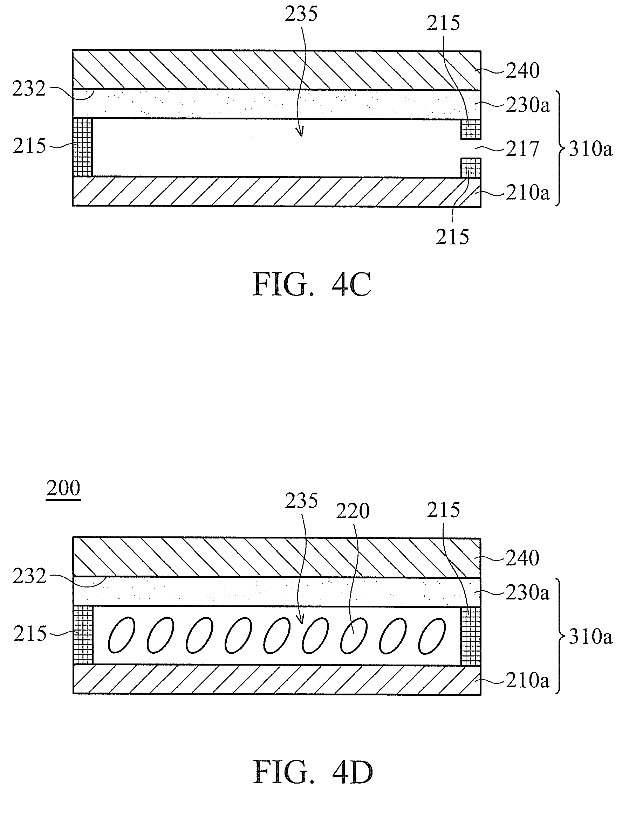

Next, referring to FIG. 4C, a touch sensor 240 is formed on an outer surface 232 of the thinned display panel 310a, e.g. the touch sensor 240 is formed on the outer surface 232 of the thinned second substrate 230a away from the thinned first substrate 210a.

In one embodiment, the touch sensor 240 is formed by forming a transparent conducting layer directly on the surface 232 of the thinned second substrate 230a away from the thinned first substrate 210a by a deposition process. The deposition process includes a chemical vapor deposition (CVD) or physical vapor deposition (PVD) process. After the deposition process, the transparent conducting layer is patterned to form the patterned transparent conducting layer. After forming the patterned transparent conducting layer, a metal layer, a dielectric layer and a protection layer are sequential formed on the patterned transparent conducting layer.

In another embodiment, the touch sensor 240 is formed on the surface 232 of the thinned second substrate 230a away from the thinned first substrate 210a by an adhesive layer.

Furthermore, before proceeding with the steps in FIG. 4D, an additional annealing step is conducted for the touch sensor 240, especially for the patterned transparent conducting layer 241 of the touch sensor 240. The purpose of the annealing step is to reduce the sheet resistance of the transparent conducting layer.

Then, in FIG. 4D, after forming the touch sensor 240, a liquid crystal layer 220 is injected into the sealing space 235 through the opening 217 between the thinned first substrate 210a and the thinned second substrate 230a. Finally, the opening 217 is sealed to prevent the liquid crystal from leaking thereout.

In yet another embodiment, the liquid crystal layer 220 is injected into the sealing space 235 before forming the touch sensor 240. For example, the injection step is conducted after the thinning step of FIG. 4B, or the injection step is conducted after the assembling step of FIG. 4A.

Moreover, if the liquid crystal layer 220 is formed after the high temperature annealing step, an additional advantage is gained wherein the color shift problem of the liquid crystal layer 220 caused by the high temperature annealing step is avoided.

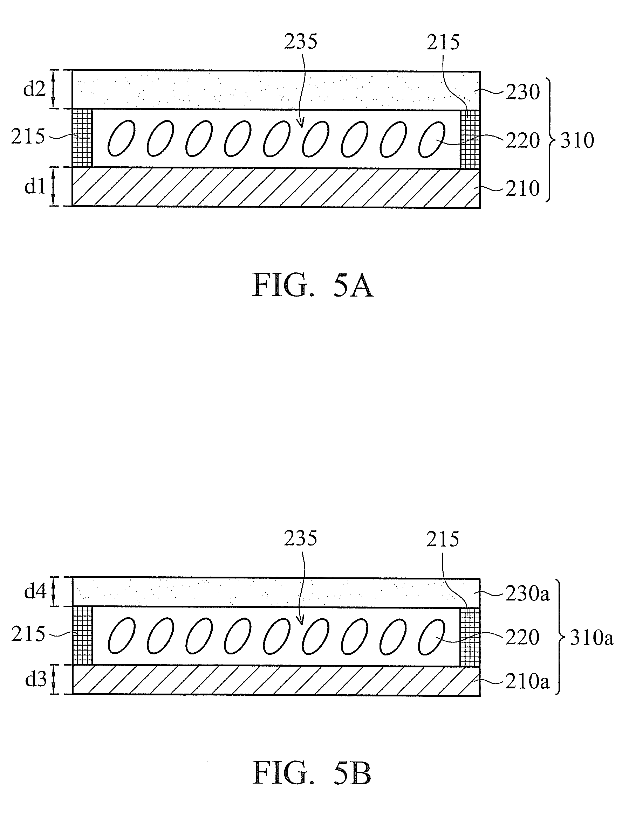

Figures 5A-5C show cross-sectional schematic representations of various stages of fabricating a touch panel in accordance with another embodiment of the disclosure, wherein like elements are identified by the same reference numbers as in FIG. 4A-4D, and thus omitted for clarity.

Referring to FIG. 5A, a display panel 310 which includes a first substrate 210 and a second substrate 230 is provided, and a liquid crystal layer 220 is formed between the first substrate 210 and the second substrate 230. The first substrate 210 has a thickness of about d₁, the second substrate 230 has a thickness of about d₂, and d₁ and d₂ are the same or different.

In one embodiment, the first substrate 210 is adhered to the second substrate 230 by a sealant 215 which is formed around the outside of the first substrate 210 or the second substrate 230. Thus, the first substrate 210 is disposed oppositely to the second substrate 230 to form a sealing space 235 with an opening 217. Then, the liquid crystal layer 220 is injected into the sealing space 235.

In another embodiment, a sealant 215 may be firstly formed around the outside of the first substrate 210 and the liquid crystal layer 220 is formed on the first substrate 210 by a one drop filling (ODF) method. Finally, the first substrate 210 and the second substrate 230 are assembled to form the liquid crystal layer 220 between the first substrate 210 and the second substrate 230. Alternatively, a sealant 215 may be firstly formed around the outside of the second substrate 230 and the liquid crystal layer 220 is formed on the second substrate 230 by a one drop filling (ODF) method. Then, the injection step and the assembling step are sequentially conducted.

Then, referring to FIG. 5B, the display panel 310 is thinned. In FIG.5B, the first substrate 210 and the second substrate 230 are thinned to form a thinned first substrate 210a and a thinned second substrate 230a, and thus the thickness of the first substrate 210 is decreased from d₁ to d₃, and the thickness of the second substrate 230 is decreased from d₂ to d₄, and d₃ and d₄ are the same or different. Alternatively, in another embodiment, the first substrate 210 or the second substrate 230 is thinned. The substrate is thinned by a thinning method (such as physical polishing or chemical etching method).

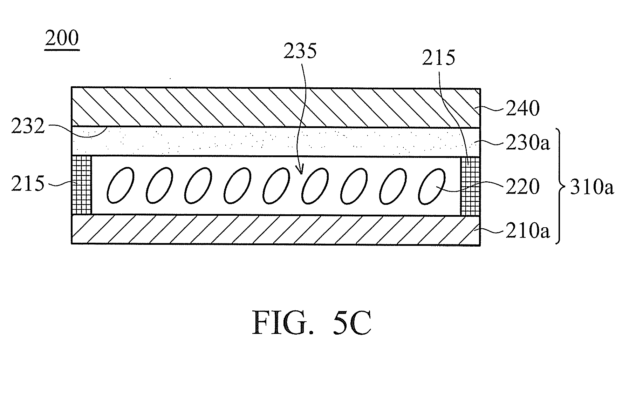

Next, referring to FIG 5C, a touch sensor 240 is formed on an outer surface 232 of the thinned display panel 310a, e.g. the touch sensor 240 is formed on the outer surface 232 of the thinned second substrate 230a away from the thinned first substrate 210a. The forming step of the touch sensor is the same as FIG. 4D, and thus omitted herein.

The formation of the touch panel of the disclosure may continue with the following steps. For example, a polarizer is formed on the touch panel, a cover glass is formed on the polarizer, and a second polarizer is formed below the touch panel. Other elements may be formed on or below the touch panel according to the actual application needs.

Note that the touch sensor 240 is directly formed on the second substrate 230, and thus the touch panel is also called an "on-cell touch panel". During operation, a user can touch the touch sensor 240 by a stylus or finger, and signals are produced by detecting the the capacity changes of the patterned transparent conductive layer 241.

Note that, compared with prior art, the touch sensor 240 of the disclosure is directly formed on the second substrate 230, and thus thickness of the touch sensor 240 is reduced due to elimination of substrates of the touch panel (such as the substrate 41 in FIG. 1) and the adhesion layer (such as the adhesion layer 30 in FIG. 1). Moreover, the transmitance of the touch panel may also be improved due to elimination of the adhesion 30 of FIG. 1, and further display quality of the touch panel may be improved.

The total thickness and weight of the touch panel is reduced by directly forming the touch sensor on the display panel and by thinning the first substrate or the second substrate. Therefore, the touch panel may meet the requirements for implementation in thin and light electronic products.

The touch panel of the disclosure may be applied to liquid crystal displays (LCDs), such as in-plane switching (IPS LCDs) or fringe field switching (FFS LCDs).

While the disclosure has been described by way of example and in terms of the preferred embodiments, it is to be understood that the disclosure is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A touch panel, comprising:
a first substrate;
a second substrate disposed oppositely to the first substrate, wherein the first substrate or the second substrate has a thickness smaller than or equal to 0.3 mm;
a liquid crystal layer disposed between the first substrate and the second substrate; and
a touch sensor directly formed on a surface of the second substrate away from the liquid crystal layer, wherein the touch sensor comprises a patterned transparent conducting layer.

2. The touch panel as claimed in claim 1, wherein the first substrate has a thickness of about 0.15 mm-0.30 mm.

3. The touch panel as claimed in claim 1, wherein the second substrate has a thickness of about 0.15 mm-0.30 mm.

4. The touch panel as claimed in claim 1, wherein the first substrate or the second substrate individually has a thickness of about 0.15 mm-0.30 mm.

5. The touch panel as claimed in claim 1, wherein the patterned transparent conducting layer comprises indium tin oxide (ITO), indium zinc oxide (IZO), cadmium tin oxide (CTO), aluminum zinc oxide (AZO), indium tin zinc oxide (ITZO) zinc oxide, cadmium oxide (CdO), hafnium oxide (HfO), indium gallium zinc oxide (InGaZnO), indium gallium zinc magnesium oxide (InGaZnMgO), indium gallium magnesium oxide (InGaMgO) or indium gallium aluminum oxide (InGaAlO).

6. The touch panel as claimed in claim 1, wherein the touch panel further comprises a metal layer, a dielectric layer and a protection layer.

7. The touch panel as claimed in claim 1, wherein the patterned transparent conducting layer comprises independent matrix structures or intersection matrix structures.

8. The touch panel as claimed in claim 7, wherein the patterned transparent conducting layer comprising the intersection matrix structures are connected by a bridge patterned transparent conducting layer or a bridge metal layer.

9. The touch panel as claimed in claim 1, wherein the touch sensor is formed by a deposition process.

10. The touch panel as claimed in claim 9, wherein the deposition process comprises a chemical vapor deposition (CVD) process or physical vapor deposition (PVD) process.

11. The touch panel as claimed in claim 1, wherein the first substrate is a thin film transistor substrate, and the second substrate is a color filter substrate.

12. The touch panel as claimed in claim 11, further comprising a color filter and a black matrix formed between the second substrate and the liquid crystal layer.

13. The touch panel as claimed in claim 1, wherein the first substrate is a color filter substrate, and the second substrate is a thin film transistor substrate.

14. The touch panel as claimed in claim 1, further comprising:
a polarizer formed on the touch panel; and
a cover glass formed on the polarizer.

15. The touch panel as claimed in claim 1, wherein the touch panel is applied to in-plane switching (IPS LCD) or fringe field switching (FFS LCD).
